Europäisches Patentamt

European Patent Office

Office européen des brevets

(19)

(11) Veröffentlichungsnummer: **0 236 828**
**B1**

(12) **EUROPÄISCHE PATENTSCHRIFT**

(45) Veröffentlichungstag der Patentschrift:
**18.07.90**

(51) Int. Cl.⁵: **G05B 19/04**

(21) Anmeldenummer: **87102500.3**

(22) Anmeldetag: **23.02.87**

(54) Speicherprogrammierbare Steuerung.

(30) Priorität: **07.03.86 DE 3607631**

(43) Veröffentlichungstag der Anmeldung:
**16.09.87 Patentblatt 87/38**

(45) Bekanntmachung des Hinweises auf die Patenterteilung:
**18.07.90 Patentblatt 90/29**

(84) Benannte Vertragsstaaten:
**DE FR GB IT NL SE**

(56) Entgegenhaltungen:
**US-A- 3 380 033**

**SIEMENS POWER ENGINEERING, Band 5, Nr. 4, Juli/August 1983, Seiten 207-209, Passau, DE; F. SCHEWE et al.: "More powerful data and text processing by memory expansion in the simatic S5-150S programmable controller"**

(73) Patentinhaber: **Siemens Aktiengesellschaft, Wittelsbacherplatz 2, D-8000 München 2(DE)**

(72) Erfinder: **Dinges, Clemens Dipl.-Inform., Vacher Strasse 466, D-8510 Fürth(DE)**
Erfinder: **Kirschbaum, Georg, Am Europakanal 40, D-8520 Erlangen(DE)**

## Beschreibung

Die Erfindung bezieht sich auf eine speicherprogrammierbare Steuerung, bestehend aus einem Programmiergerät und einem Automatisierungsgerät, bei der gemäß einem jeweils prozeßspezifisch projektierbaren Anwenderprogramm als Quellinformation mit Hilfe des Programmiergerätes ein Maschinenprogramm für das Automatisierungsgerät zum Steuern des technischen Prozesses erzeugt wird, wobei das Maschinenprogramm einem vorgegebenen Speicherbereich des Automatisierungsgerätes einprägbar ist, wobei die Steuerfunktionen des Automatisierungsgerätes entsprechend dem Maschinenprogramm ablaufen und wobei das Anwenderprogramm außer den für das Erzeugen des Maschinenprogramms unbedingt erforderlichen Informationen weitere Informationsteile beinhaltet.

Speicherprogrammierbare Steuerungen (SPS) werden für die Lösung von Automatisierungsaufgaben eingesetzt: Für Prozeßsteuerungen und Prozeßüberwachung, für Diagnose, für Maschinensteuerungen und Regelungen. Ein wesentliches Merkmal einer speicherprogrammierbaren Steuerung liegt in der funktionellen Trennung in Programmier- und Automatisierungsgerät.

Bei den Automatisierungsgeräten handelt es sich um standardisierte Geräte, die durch spezifische Anwenderprogramme an die jeweilige Automatisierungsaufgabe angepaßt werden können. Dazu wird mit Hilfe eines Programmiergerätes das jeweilige Anwenderprogramm erstellt und dokumentiert sowie in ein im Maschinencode vorliegendes Maschinenprogramm übersetzt. Das Maschinenprogramm wird dann vom Programmiergerät zum Automatisierungsgerät übertragen und dort einem vorgegebenen Speicherbereich eingeprägt. Durch die Abarbeitung des Maschinenprogramms im Automatisierungsgerät wird der eigentliche Prozeß gesteuert.

Treten in einer automatisierten Anlage Störungen im Prozeß auf, so muß zur Vermeidung hoher Stillstandskosten unverzüglich mit der Fehlerlokalisation und -behebung begonnen werden. Dazu wird dann wieder das Anwenderprogramm benötigt, und zwar in einer Quelldarstellung, d.h. auf dem Sprachniveau, mit dem das Anwenderprogramm ursprünglich im Programmiergerät vorgelegen hat und in genau der Version, die zuletzt in das Maschinenprogramm übersetzt worden ist. Steht die Quellinformation bereit, kann dann "online", d.h. durch Kopplung Programmiergerät-Automatisierungsgerät, getestet werden und gegebenenfalls eine Änderung des bislang vorliegenden Anwenderprogramms vorgenommen werden.

Da die ständige Verfügbarkeit der Quellinformation nicht gewährleistet werden kann, wenn diese Information ausschließlich außerhalb des Automatisierungsgerätes, d.h. in einem Programmiergerät oder auf Datenträgern, gespeichert ist, muß diese Information im Automatisierungsgerät gespeichert werden.

Bei handelsüblichen speicherprogrammierbaren Steuerungen der eingangs genannten Art (Walter Ritter, SIMATIC S5 Speicherprogrammierbares Automatisierungsgerät S5-110A, 4. Auflage, 1983, Siemens AG) wird die Anforderung, die aktuelle Quellinformation ständig verfügbar zu halten, durch eine Rückübersetzung gelöst. Die Quellinformation wird dazu aus dem im Automatisierungsgerät ablaufenden Maschinenprogramm mit Hilfe von in diesem vorliegenden Zusatzinformationen rekonstruiert.

Dadurch ist jedoch wegen der Zusatzinformationen ein relativ großer Speicherbedarf für das Maschinenprogramm erforderlich und das Programm kann demzufolge hinsichtlich seiner Laufzeit für den Prozeß nicht optimiert werden. Diese Probleme werden insbesondere dann signifikant, wenn Bildinformationen mit hohem Informationsgehalt im ablaufenden Maschinenprogramm enthalten sein sollen. Gerade der Anteil an Bildinformationen nimmt aber bei wachsendem Komfort der speicherprogrammierbaren Steuerungen überproportional zu.

Aufgabe der Erfindung ist es, eine speicherprogrammierbare Steuerung der eingangs genannten Art so auszubilden, daß das Maschinenprogramm hinsichtlich Laufzeit und Speicherplatz optimiert werden kann. Ferner soll der Speicherbedarf für die weiteren Informationsteile im Automatisierungsgerät minimiert werden.

Gemäß der Erfindung wird diese Aufgabe dadurch gelöst, daß die weiteren Informationsteile nicht in das Maschinenprogramm aufgenommen werden, sondern in mindestens einem gesonderten Speicherbereich des Automatisierungsgerätes abgespeichert werden, und daß die weiteren Informationsteile dazu dem gesonderten Speicherbereich über einen Umsetzer, der Mittel zur Datenkomprimierung und Dekomprimierung enthält, komprimiert zugeführt werden und bedarfsweise von dort über den Umsetzer dekomprimiert an das Programmiergerät rückleitbar sind.

Ein Komprimier- und Dekomprimierverfahren ist dabei beispielsweise im PC-Magazin Nr. 6 vom 30.01.1985, Seite 42–44 "Komprimieren und Verschlüsseln in einem" beschrieben.

Eine vorteilhafte Ausbildung der Erfindung ist dadurch gekennzeichnet, daß der weitere Speicherbereich hinsichtlich der Informationsteile – Logik, Graphik, Symbolik und/oder Kommentare – in unabhängige Teilbereiche getrennt ist. Dadurch ist eine große Freizügigkeit der Speicherorganisation gewährleistet.

Dadurch, daß der Speicherbereich für den Informationsteil Logik als ausfallsicherer Speicher ausgebildet ist, kann erreicht werden, daß dieser wesentlichste Informationsteil mit Sicherheit verfügbar bleibt. Wenn bei der Fehlerlokalisation auf Komfort verzichtet werden kann, ist es nämlich auch möglich, daß nicht zwingend erforderliche Informationsteile, z.B. der Informationsteil Graphik, nicht im weiteren Speicherbereich hinterlegt sind.

Dadurch, daß bei einer Änderung des Anwenderprogramms sichergestellt ist, daß die Änderung das Maschinenproprogramm und die weiteren Informationsteile in gleicher Weise variiert, ist eine große Sicherheit gegen fehlerhafte Programmänderungen möglich.

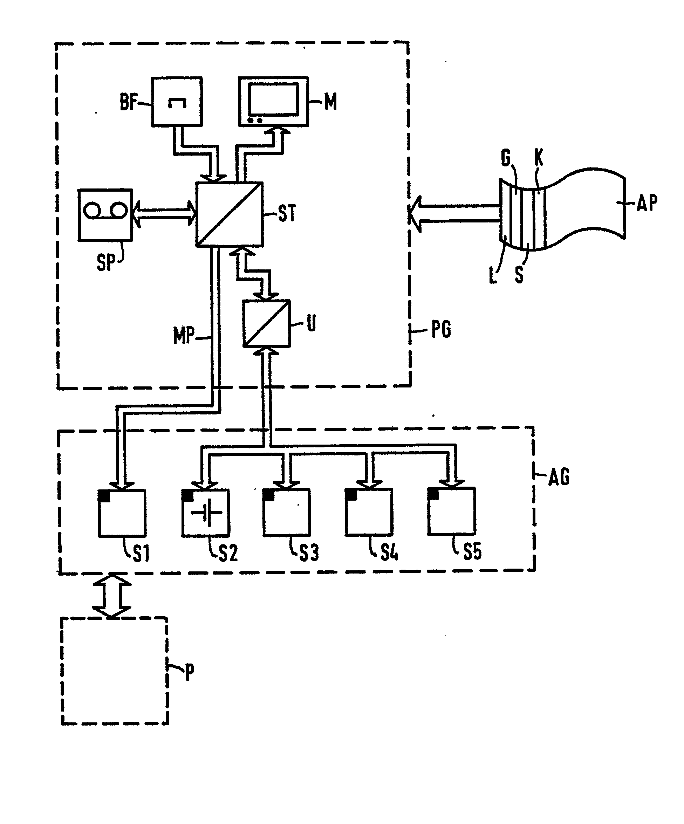

Ein Ausführungsbeispiel der Erfindung ist in der Zeichnung dargestellt und wird im folgenden näher erläutert.

Die Darstellung zeigt eine speicherprogrammierbare Steuerung, die aus einem Programmiergerät PG und einem Automatisierungsgerät AG, jeweils gestrichelt angedeutet, besteht. Dem Programmiergerät PG wird als Quellinformation ein Anwenderprogramm AP zugeleitet, das Informationsteile Logik L, Graphik G, Symbolik S und Kommentare K beinhaltet. Dieses Anwenderprogramm AP kann beispielsweise über ein Bedienfeld BF oder über ein Speichergerät SP dem eigentlichen Steuerwerk ST des Programmiergerätes PG zugeleitet werden. Jede Dateneingabe sowie beliebige Funktionen des Steuerwerks ST können über einen mit dem Steuerwerk ST verbundenen Monitor M angezeigt werden.

Vom Steuerwerk ST wird anhand des Anwenderprogramms AP ein Maschinenprogramm MP im Maschinencode erstellt, das auf den vom Automatisierungsgerät AG zu steuernden Prozeß P (ebenfalls gestrichelt angedeutet) einwirkt. Dieses Maschinenprogramm MP wird in einem Speicherbereich S1 des Automatisierungsgerätes AG abgespeichert und beim Koppeln des Automatisierungsgerätes AG mit dem Prozeß P Schritt für Schritt abgearbeitet. Ein den Speicherbereich S1 beinhaltender Speicher des Automatisierungsgerätes AG kann als ausfallsicherer Schreib-Lese-Speicher RAM oder auch als löschbarer Festwertspeicher EPROM ausgebildet sein. Das Maschinenprogramm MP, das aus dem Anwenderprogramm AP vom Steuerwerk ST generiert worden ist, kann hinsichtlich Laufzeit und Speicherbedarf optimiert werden, da dem Maschinenprogramm MP keine Daten hinsichtlich der weiteren Informationsteile Logik L, Graphik K, Symbolik S und Kommentare K einzufügen sind. Diese weiteren Informationsteile werden nämlich in Speicherbereiche S2, S3,S4 und S5 des Automatisierungsgerätes AG eingeprägt, die einem oder mehreren Speichern zuzuordnen sind. Im Ausführungsbeispiel ist der Informationsteil Logik L dem Speicherbereich S2, der Informationsteil Graphik G, dem Speicherbereich S3, der Informationsteil Symbolik S, dem Speicherbereich S4 und der Informationsteil Kommentare K, dem Speicherbereich S5 zugeordnet.

Da für die eingangs geschilderten Service-Aufgaben der Informationsteil Logik L unverzichtbar ist, ist der zugehörige Speicherbereich S2 nullspannungsgesichert ausgebildet, während auf eine derartige Datensicherung für die Speicherbereiche S3,S4 und S5 verzichtet werden kann.

Damit der Speicherbedarf für die weiteren Informationsteile Logik L, Graphik G, Symbolik S und Kommentare K minimiert werden kann, ist zwischen das Steuerwerk ST und das Automatisierungsgerät AG ein Umsetzer U geschaltet, der als Datenkomprimiereinrichtung vom Steuerwerk ST zum Automatisierungsgerät AG wirkt und als Datendekomprimiereinrichtung vom Automatisierungsgerät AG zum Steuerwerk ST hin dient.

Abweichend gegenüber dem Ausführungsbeispiel wäre es auch möglich, daß die Informationsteile Graphik G, Symbolik S und Kommentare K nicht vollständig im Automatisierungsgerät AG, sondern zu einem gewissen Anteil im Programmiergerät PG gespeichert werden.

## Patentansprüche

1. Speicherprogrammierbare Steuerung, bestehend aus einem Programmiergerät (PG) und einem Automatisierungsgerät (AG), bei der gemäß einem jeweils prozeßspezifisch projektierbaren Anwenderprogramm (AP) als Quellinformation mit Hilfe des Programmiergerätes (PG) ein Maschinenprogramm (MP) für das Automatisierungsgerät (AG) zum Steuern des technischen Prozesses erzeugt wird, wobei das Maschinenprogramm (MP) einem vorgegebenen Speicherbereich (S1) des Automatisierungsgerätes (AG) einprägbar ist, wobei die Steuerfunktionen des Automatisierungsgerätes (AG) entsprechend dem Maschinenprogramm (MP) ablaufen und wobei das Anwenderprogramm (AP) außer den für das Erzeugen des Maschinenprogramms (MP) unbedingt erforderlichen Informationen weitere Informationsteile (L, G, S, K) beinhaltet, dadurch gekennzeichnet, daß die weiteren Informationsteile (L, G, S, K) nicht in das Maschinenprogramm (MP) aufgenommen werden, sondern in mindestens einem gesonderten Speicherbereich (S2 bis S5) des Automatisierungsgerätes (AG) abgespeichert werden, und daß die weiteren Informationsteile (L, G, S, K) dazu dem gesonderten Speicherbereich (S2 bis S5) über einen Umsetzer (U), der Mittel zur Datenkomprimierung und Dekomprimierung enthält, komprimiert zugeführt werden und bedarfsweise von dort über den Umsetzer (U) dekomprimiert an das Programmiergerät (PG) rückleitbar sind.

2. Speicherprogrammierbare Steuerung nach Anspruch 1, dadurch gekennzeichnet, daß der weitere Speicherbereich (S2 bis S5) hinsichtlich der Informationsteile – Logik (L), Graphik (G), Symbolik (S) und/oder Kommentare (K) – in unabhängige Teilbereiche getrennt ist.

3. Speicherprogrammierbare Steuerung nach Anspruch 2, dadurch gekennzeichnet, daß der Speicherbereich (S2) für den Informationsteil Logik (L) als ausfallsicherer Speicher ausgebildet ist.

4. Speicherprogrammierbare Steuerung nach einem der vorstehenden Ansprüche, dadurch gekennzeichnet, daß bei einer Änderung des Anwenderprogramms (AP) sichergestellt ist, daß die Änderung das Maschinenprogramm (MP) und die weiteren Informationsteile (L, G, S, K) in gleicher Weise variiert.

## Revendications

1. Dispositif de commande programmable en mémoire, constitué par un appareil de programmation (PG) et un appareil d'automatisation (AG), dans lequel un programme machine (MP) pour l'appareil d'automatisation (AG) est produit en tant qu'information source, à l'aide de l'appareil de programmation (PG), pour la commande du processus technique, conformément à un programme utilisateur (AP), pouvant être projeté d'une manière spécifique au processus, et dans lequel le programme machine (MP) peut être enregistré dans une zone prédéterminée de mémoire (S1) de l'appareil d'automatisation (AG), les fonctions de commande de l'appareil d'automatisation (SG) se déroulent conformément au programme machine (MP) et le programme utilisateur (AP) comporte, en plus des informations absolument nécessaires pour la production du programme machine (MP), d'autres éléments d'information (L, G, S, K), caractérisé par le fait que les différents éléments d'information (L, G, S, K) ne sont pas enregistrés dans le programme machine (MP), et sont mémorisés dans au moins une zone particulière de mémoire (S2 à S5) de l'appareil d'automatisation (AG), et que les autres éléments d'infromation (L, G, S, K) sont, à cet effet, envoyés à l'état comprimé à la zone particulière de mémoire (S2 à S5) par l'intermédiaire d'un convertisseur (U), qui contient des moyens servant à réaliser une compression et une expansion de données, et peuvent être renvoyés, le cas échéant, depuis cet endroit à l'appareil de programmation (PG) par l'intermédiaire du convertisseur (U), à l'état expansé.

2. Dispositif de commande programmable en mémoire suivant la revendication 1, caractérisé par le fait que l'autre zone de mémoire (S2 à S5) est subdivisée en des zones partielles indépendantes, pour ce qui concerne les éléments d'information tels que logiques (L), graphique (G), symbolique (S) et/ou commentaires (K).

3. Dispositif de commande programmable en mémoire suivant la revendication 2, caractérisé par le fait que la zone de mémoire (S2) pour l'élément d'information logique (L) est réalisée sous la forme d'une mémoire à sécurité intrinsèque.

4. Dispositif de commande programmable en mémoire suivant l'une des revendications précédentes, caractérisé par le fait que dans le cas d'une modification du programme d'utilisateur (P), on est certain que ceci entraîne une modification identique du programme machine (MP) et des autres éléments d'information (L, G, S, K).

## Claims

1. Memory-programmable controller, consisting of a programming unit (PG) and an automating unit (AG), in which a machine programme (MP) for the automating unit (AG) is generated for controlling the technical process, according to a user-configurable user programme (AP), process-specific in each case, as source information with the help of the programming unit (PG), with the machine programme (MP) being capable of being imprinted on a specified memory region (S1) of the automating unit (AG), with the control functions of the automating unit (AG) running in accordance with the machine programme (MP), and with the user programme (AP) containing further information parts (L, G, S, K) in addition to the information absolutely required for generating the machine programme (MP), characterised in that the further information parts (L, G, S, K) are not contained in the machine programme (MP), but are stored in at least one separate memory region (S2 to S5) of the automating unit (AG), and in that, for this, the further information parts (L, G, S, K) are fed in compressed manner to the separate memory region (S2 to S5) by way of a converter (U) which contains means for data compression and expansion, and can be returned from there in expanded manner as necessary to the programming unit (PG) by way of the converter (U).

2. Memory-programmable controller according to claim 1, characterised in that the further memory region (S2 to S5) is separated into independent partial regions with respect to the further information parts – logic (L), graphic (G), symbolic (S) and/or comments (K).

3. Memory-programmable controller according to claim 2, characterised in that the memory area (S2) for the logic (L) information part is formed as a fail-safe memory.

4. Memory-programmable controller according to one of the preceding claims, characterised in that, when the user programme (AP) is changed, the change is guaranteed to vary the machine programme (MP) and the further information parts (L, G, S, K) in the same way.